# EUROPÄISCHE PATENTSCHRIFT

(11) **EP 2 735 809 B1**
(45) Veröffentlichungstag und Bekanntmachung des Hinweises auf die Patenterteilung: **18.05.2022**
(21) Anmeldenummer: 13190109.2
(22) Anmeldetag: 24.10.2013
(51) Int. Cl.: F24F 11/00, F24C 15/20, F24F 110/00, F24F 11/30, F24F 7/00

(54) **Überwachungssystem und Verfahren zur Überwachung und Einstellung von Luftparametern in einem Raum, Dunstabzugsvorrichtung zur Verwendung in einem Überwachungssystem**
Monitoring system and method for monitoring and adjusting air parameters in a room, extractor hood device for use in a monitoring system
Système de surveillance et procédé de surveillance et de réglage de paramètres liés à l'air dans une pièce, dispositif d'aspiration de vapeur destiné à être utilisé dans un système de surveillance

(30) Priorität: 13.11.2012 DE 102012220598
(43) Veröffentlichungstag der Anmeldung: 28.05.2014
(73) Patentinhaber: BSH Hausgeräte GmbH, 81739 München (DE)
(72) Erfinder: Häpp, Claudia, 80639 München (DE); Pietsch, Ingo, 81829 München (DE); Thaler, Sabine, 81543 München (DE)

(56) Entgegenhaltungen:
- EP-B1- 2 022 244
- CA-A1- 2 775 647
- KR-A- 20100 093 920
- US-A1- 2012 064 923
- US-B1- 6 920 874

## Beschreibung

Die Erfindung betrifft ein Überwachungssystem und ein Verfahren zur Überwachung und Einstellung von Luftparametern in einem Raum.

Zur Überwachung von Zuständen in Gebäuden, insbesondere zum Erkennen von Gefahrensituationen ist es bekannt Sensoren einzusetzen. Beispielsweise sind Temperatursensoren für Aufputzmontage oft auch in Kombination mit Luftfeuchtigkeitsmessern bekannt. Daneben gibt es einige Brandgas- oder Rauchgasmelder, die Alarm schlagen, wenn die Konzentration von Kohlenstoffmonoxid, Kohlenstoffdioxid oder anderer Verbrennungsgasen in einem Raum einen bestimmten Wert überschreitet und somit die Gefahr eines Brandes beziehungsweise einer Rauchgasvergiftung besteht.

EP 2 022 244 B1 offenbart ein Überwachungssystem umfassend eine Dunstabzugshaube gemäß dem Oberbegriff von Anspruch 1. Die Dunstabzugshaube umfasst bi-direktionale Mittel zum Senden und Empfangen von Signalen an und von einem Telefongerät.

KR 2010 0093920 A beschreibt ein Dunstabzugshaubensystem und ein Steuerungsverfahren, um Temperatur, Gerüche und Rauch Schritt für Schritt für eine Brandsituation, die in einer Küche auftreten kann, zu erkennen und Maßnahmen zu treffen.

In der US 2012/0064923 A1 wird ein Verfahren zur Steuerung des Energieverbrauchs eines innerhalb eines Netzwerks angeordneten Geräts beschrieben. Das Verfahren erfolgt über eine, um das entsprechende Gerät liegende Zoneneinteilung. Zusätzlich wird der momentane Ort eines mobilen Endgeräts in Relation zu der Mehrzahl der Zonen ermittelt. Des Weiteren wird der Betriebszustand eines Gerätes geändert, sobald ermittelt wird, dass das mobile Endgerät zwischen den Zonen wechselt. Die Änderungen des Betriebszustandes eines Geräts können über ein Thermostat erfolgen.

Weiterhin wird in der US 6,920,874 B1 eine Dunstabzugshaube beschrieben, die auf Grund der detektierten Level von vier unterschiedlichen Luftqualitätssensoren: Temperatur, Luftfeuchtigkeit, Kohlenmonoxid und Rauch einen drehzahlgeregelten Ventilator betreibt. Ein Mikroprozessor wird verwendet, um die vier Signale zu integrieren und die entsprechenden Anforderungen an die Belüftung zu bestimmen. Dieser Wert wird in ein Signal umgewandelt, um den Ventilator zu betreiben. Außerdem werden visuelle Indikatoren beschrieben, die den Zustand eines jeden Luftqualitätssensors zeigen. Ein akustischer Alarm wird aktiviert, wenn das ermittelte Niveau nach Aktivierung des Ventilators für ein zuvor bestimmtes Zeitintervall bei dem gefährlichen Niveau stehen bleibt.

Schließlich ist aus der CA 27775647 A1 ein System zur automatischen Programmierung der Temperaturanpassungszeiten eines HVAC (heating, ventilation and air conditioning) Systems beschrieben.

Ein Nachteil dieser bekannten Sensoren besteht darin, dass diese zum einen nur lokal begrenzt genutzt werden können und zum anderen in der Regel nur mit einer einzigen speziell mit dem Sensor verbundenen Komponente kommunizieren können, um beispielsweise einen Alarm auszulösen.

Aufgabe der vorliegenden Erfindung ist es daher eine Lösung zu schaffen, mittels derer die Luftparameter eines Raums in einem Gebäude flexibel ermittelt und eingestellt werden können.

Der Erfindung liegt die Erkenntnis zugrunde, dass diese Aufgabe gelöst werden kann, indem mindestens ein Sensor vorgesehen ist, der flexibel mit einer Überwachungseinheit kommunizieren kann und dessen Daten intelligent weiterverarbeitet werden können. Gemäß einem ersten Aspekt der Erfindung wird die Aufgabe gelöst durch ein Überwachungssystem zur Überwachung und Einstellung von zumindest einem Luftparameter in einem Raum mit den Merkmalen des Anspruchs 1. Bevorzugte Ausführungsformen der Erfindung sind in den abhängigen Ansprüchen definiert.

Als Überwachungssystem wird im Sinne der Erfindung ein System verstanden, dessen Komponenten zusammen dazu dienen Luftparameter in einem Raum überwachen und einstellen zu können. Als Luftparameter werden erfindungsgemäß Parameter verstanden, die Auskunft über die Luftqualität geben. Hierbei werden sowohl Parameter, die die Luftzusammensetzung betreffen, als auch Parameter, die die Temperatur der Luft betreffen, als Luftparameter bezeichnet. Bei den Parametern, die die Luftzusammensetzung betreffen werden sowohl qualitative als auch quantitative Parameter als Luftparameter verstanden. Insbesondere können die Parameter, die die Luftzusammensetzung betreffen, die Luftfeuchtigkeit und/oder der Gehalt an festen oder gasförmigen Substanzen sein. Beispielsweise kann daher der Gehalt und gegebenenfalls die Art von Pollen in der Luft als Luftparameter gemäß der Erfindung verwendet werden. Weiterhin kann der Gehalt an beispielsweise Kohlenmonoxid, Kohlendioxid, Schwefeldioxid und/oder Stickstoffoxide als Luftparameter verwendet werden. Unterschiedliche Luftparameter können über unterschiedliche Sensoren erfasst werden. Es ist aber auch möglich mehrere Luftparameter über einen einzigen Sensor zu erfassen. Erfindungsgemäß wird zumindest ein Luftparameter überwacht und eingestellt, es ist allerdings bevorzugt, dass mehrere, insbesondere mindestens zwei Luftparameter eingestellt werden. Im Folgenden wird im Wesentlich auf mehrere Luftparameter Bezug genommen, ohne dass die Erfindung darauf beschränkt ist. Ausführungen betreffend mehrere Luftparameter gelten - soweit anwendbar - auch für einen einzelnen Luftparameter.

Als Überwachung von Luftparametern wird erfindungsgemäß das Erfassen oder Erkennen der Luftparameter beziehungsweise entsprechender Sensorsignale bezeichnet. Zusätzlich kann die Überwachung aber vorzugsweise auch die Verarbeitung der erfassten oder erkannten Luftparameter und insbesondere der erfassten Sensorsignale umfassen. Hierbei kann beispielsweise ein Vergleich mit einem Schwellwert oder Grenzwert durchgeführt werden. Die erfassten Sensorsignale und/oder die verarbeiteten Sensorsignale, insbesondere die aus der Verarbeitung erhaltenen Daten, werden im Folgenden auch als Überwachungsergebnis bezeichnet. Die Einstellung von Luftparametern umfasst erfindungsgemäß zumindest die Ausgabe zumindest eines Überwachungsergebnisses. Die Einstellung kann automatisch und/oder durch den Benutzer des Überwachungssystems erfolgen. Die Einstellung der Luftparameter kann somit erfindungsgemäß die Anzeige eines Überwachungsergebnisses oder andere Ausgabe eines oder mehrerer Überwachungsergebnisse sein. Zusätzlich oder alternativ können zur Einstellung insbesondere Vorrichtungen oder Einheiten bedient oder angesteuert werden, die die Luftparameter direkt oder indirekt beeinflussen. Diese Vorrichtungen oder Einheiten können insbesondere Haustechnikvorrichtungen oder Haustechnikeinheiten sein, die im Folgenden als Haustechnikvorrichtungen bezeichnet werden. Haustechnikvorrichtungen können beispielsweise Luftbeeinflussungseinheiten, wie beispielsweise Filter, Fenster oder Türen sowie Luftfördervorrichtungen, wie Dunstabzugshauben oder Lüfterkästen sein. Zudem können die Haustechnikvorrichtungen auch Temperaturregeleinheiten, wie eine Heizung oder Klimaanlage sein. Schließlich kann das Einstellen der Luftparameter auch das Aktivieren von Warnmechanismen aufgrund der Überwachungsergebnisse umfassen. Das Aktivieren von Warnmechanismen kann beispielsweise das Absetzen eines Notrufes oder das Auslösen eines Alarms umfassen.

Der Raum, in dem erfindungsgemäß die Luftparameter überwacht und eingestellt werden, ist erfindungsgemäß ein Raum in einem Gebäude, insbesondere ein Wohnraum. Obwohl im Folgenden auf einen einzigen Raum Bezug genommen wird, ist die Erfindung nicht darauf beschränkt. Vielmehr können auch in mehreren Räumen eines Gebäudes die Luftparameter gleichzeitig überwacht und eingestellt werden. Die Ausführungen, die bezüglich eines Raumes gemacht werden, gelten somit entsprechend auch für mehrere Räume.

Das Überwachungssystem umfasst erfindungsgemäß zumindest einen Sensor. Der Sensor kann einen Temperatursensor und/oder einen Luftzusammensetzungssensor darstellen. Der Sensor erfasst Luftparameter und gibt vorzugsweise Sensorsignale aus, die den Luftparametern entsprechen oder diesen zugeordnet werden können, das heißt aus den Sensorsignalen ermittelt werden können. Werte, die aus den Sensorsignalen ermittelt werden, werden im Folgenden auch als Sensordaten bezeichnet. Sensordaten können hierbei zusätzlich zu den Werten aus den Sensorsignalen auch Angaben über den Sensor selber enthalten. Diese Angaben können beispielsweise die Art und/oder Position des Sensors sowie gegebenenfalls Umgebungsbedingungen des Sensors umfassen. Als Umgebungsbedingungen kann beispielsweise der Betrieb einer Luftförderungsvorrichtung und/oder eines Wärme erzeugenden Gerätes, wie beispielsweise eines Herdes angegeben werden.

Weiterhin umfasst das Überwachungssystem gemäß der vorliegenden Erfindung zumindest eine Überwachungseinheit, die zu dem Sensor separat vorgesehen ist. Als separat vorgesehen, wird erfindungsgemäß eine Überwachungseinheit bezeichnet, die vorzugsweise zu dem Sensor beabstandet vorgesehen ist und die separat zu dem Sensor betrieben werden kann. Insbesondere ist vorzugsweise zwischen dem Sensor und der Überwachungseinheit keine proprietäre Verbindung gegeben. Solche proprietären Verbindungen werden im Stand der Technik beispielsweise bei Fernbedienungen oder Zentraleinheiten für Geräte verwendet und lassen ausschließlich eine Übertragung von bestimmten Daten oder Signalen an einen bestimmten Empfänger über eine festgelegte Kommunikationsart zu.

Der Sensor ist erfindungsgemäß, hingegen, mit der mindestens einen Überwachungseinheit über eine drahtlose Kommunikationsverbindung eines Kommunikationsnetzes verbunden. Als Kommunikationsnetz werden erfindungsgemäß insbesondere ein lokales drahtloses Kommunikationsnetz, ein Mobilfunknetz, ein Intranet und/oder das Internet bezeichnet. Die Kommunikationsverbindung von dem Sensor zu der Überwachungseinheit ist erfindungsgemäß drahtlos. Dies bedeutet, dass die Übermittlung von Sensorsignalen und/oder Sensordaten, insbesondere von Werten die aus den Sensorsignalen ermittelt wurden, ohne direkte physikalische Verbindung zwischen dem Sensor und der Überwachungseinheit erfolgt. Beispielsweise kann die drahtlose Kommunikationsverbindung zwischen dem Sensor und der Überwachungseinheit über ein so genanntes WLAN (Wireless Local Area Network) gegebenenfalls unter Einbindung des Internet erfolgen.

Schließlich umfasst die das Überwachungssystem nach der vorliegenden Erfindung mindestens ein mobiles Endgerät des Kommunikationsnetzes, über das der Sensor mit der Überwachungseinheit kommunizieren kann. Das mobile Endgerät stellt vorzugsweise einen tragbaren Computer, beispielsweise einen Tablet PC oder ein Mobiltelefon mit Computerfunktionalitäten, insbesondere eine Smartphone, dar. Auf dem mobilen Endgerät ist erfindungsgemäß zumindest ein Teil der Überwachungseinheit vorgesehen. Die Überwachungseinheit kann somit erfindungsgemäß vollständig oder teilweise auf dem mobilen Endgerät vorgesehen sein. Es ist daher erfindungsgemäß möglich, dass der Teil der Überwachungseinheit, der auf dem mobilen Endgerät vorgesehen ist, mit weiteren Teilen der Überwachungseinheit, die beispielsweise auf einem Server im Internet vorgesehen sein können, kommuniziert, um die Überwachung und Einstellung der Luftparameter zu ermöglichen. Erfindungsgemäß ist auf dem mobilen Endgerät zumindest der Teil der Überwachungseinheit vorgesehen, der zur Ausgabe und Weiterverarbeitung von Überwachungsergebnissen, zur Aktivierung von Warnmechanismen und/oder zur Ansteuerung von Haustechnikvorrichtungen dient.

Indem bei dem erfindungsgemäßen Überwachungssystem der Ort der Erfassung der Luftparameter von dem Ort der Verarbeitung der erfassten Signale, Daten oder Werte separat ist, aber diese Angaben über ein Kommunikationsnetz übertragen werden und zumindest ein mobiles Endgerät vorgesehen ist, an dem zumindest ein Teil der Überwachungseinheit vorgesehen ist, kann eine Reihe von Vorteilen erzielt werden. Zum einen kann die Verarbeitung in einer Komponente des Überwachungssystems erfolgen, die nicht zwangsweise an dem Ort der Erfassung der Luftparameter vorgesehen sein muss. Dadurch kann auf der einen Seite ein flexibles Anordnen der Sensoren zum Erfassen der Luftparameter erfolgen. Auf der anderen Seite kann eine Verarbeitung der Daten gegebenenfalls mit weiteren zur Verfügung stehenden Daten an einer anderen Komponente des Überwachungssystems oder einer weiteren Einheit des Kommunikationssystems, wie beispielsweise einem Netzwerkserver, erfolgen. Zudem kann die Übertragung der erfassten Sensorsignale oder Sensordaten, die im Folgenden auch als Signale oder Daten bezeichnet werden, an unterschiedliche Empfänger flexibel erfolgen, da die Übertragung über ein Kommunikationsnetz erfolgt, das nicht auf eine Kommunikation von dem Sensor mit der Überwachungseinheit beschränkt ist. Durch die Verwendung eines solchen drahtlosen Kommunikationsnetzes können auch weitere Informationen bei der Verarbeitung der Sensorsignale oder Daten auf einfache Weise berücksichtigt werden. Schließlich können durch die Verwendung eines solchen Kommunikationsnetzes und das Vorsehen zumindest eines Teils der Überwachungseinheit auf einem mobilen Endgerät des Kommunikationsnetzes auch weitere Funktionen des mobilen Endgerätes, wie beispielsweise die Anzeige oder der Aufbau einer Kommunikationsverbindung vorteilhaft genutzt werden.

Gemäß einer bevorzugten Ausführungsform stellt die Überwachungseinheit eine Anwendung dar, die auf einem elektronischen Gerät neben anderen Programmen ausgeführt werden kann. Die Anwendung wird im Folgenden auch als App bezeichnet. Die Anwendung stellt somit insbesondere ein Programm dar, das auf einem elektronischen Gerät installiert und zusätzlich zu weiteren Programmen auf dem elektronischen Gerät ausgeführt werden kann. Somit stellt die Anwendung nicht das einzige auf dem elektronischen Gerät ausführbare Programm dar. Besonders bevorzugt ist die Anwendung so ausgelegt, dass diese Zugriff auf weitere Funktionen des elektronischen Gerätes, insbesondere den Empfang von Daten von einer Kommunikationsschnittstelle des elektronischen Gerätes erlaubt. Das elektronische Gerät stellt hierbei vorzugsweise ein mobiles Endgerät des Kommunikationsnetzwerkes dar. Insbesondere stellt die Anwendung daher vorzugsweise eine Smartphone App oder eine Tablet PC App dar.

Indem die Anwendung eine App darstellt, kann das Überwachungssystem flexibel implementiert werden, da diese App auf ein beliebiges mobiles Endgerät des Kommunikationsnetzes geladen und dort installiert werden kann. Dadurch wird es möglich die Anwendung auch auf einem mobilen Endgerät vorzusehen, über das beispielsweise Kommunikationsverbindungen zu weiteren Einheiten des Kommunikationsnetzes hergestellt werden können, beispielsweise ein Anruf initiiert werden kann. Zudem kann die App auch auf Informationen zugreifen, die gegebenenfalls nicht in dem mobilen Endgerät sondern beispielsweise auf einem Netzwerkserver hinterlegt sind. Hierdurch kann die Überwachung und Einstellung der Luftparameter noch präziser erfolgen.

Gemäß einer Ausführungsform umfasst die Kommunikationsverbindung zwischen dem Sensor und der Überwachungseinheit zumindest eine mit dem Sensor verbundene Kommunikationsschnittstelle. Die Kommunikationsschnittstelle ist vorzugsweise an demselben Gerät oder derselben Komponente des Überwachungssystems vorgesehen, an der der Sensor vorgesehen ist. Erfindungsgemäß ist es auch möglich, dass die Kommunikationsschnittstelle mit dem Sensor zusammengefasst ist, das heißt dieser eine Kommunikationsschnittstelle aufweist. Indem die Übertragung der Daten und/oder Signale von dem Sensor an die Kommunikationsschnittstelle über eine Verbindung, die vorzugsweise kabelgebunden oder schaltungsgebunden ist, erfolgt, ist es möglich auch Signale oder Daten mit hoher Datenmenge an die Kommunikationsschnittstelle zu übermitteln. An der Kommunikationsschnittstelle können die Daten oder Signale dann an eine Übermittlung über das drahtlose Kommunikationsnetz angepasst, beispielsweise komprimiert oder konvertiert, werden. Insbesondere bei einer Kommunikationsschnittstelle, die nicht in den Sensor integriert ist, ist es von Vorteil, dass diese Kommunikationsschnittstelle für mehrere Sensoren zur Übermittlung dienen kann, das heißt mit mehreren Sensoren verbunden sein kann. Als Kommunikationsschnittstelle kann hierbei auch eine Schnittstelle verwendet werden, die bereits zu anderen Zwecken, das heißt zur Übermittlung anderer Daten an einer Vorrichtung oder einem Gerät vorgesehen ist, an dem sich der oder die Sensoren befinden.

Vorzugsweise ist die Überwachungseinheit zur Verarbeitung von Signaldaten ausgelegt. Die Verarbeitung von Signaldaten ist erfindungsgemäß vorzugsweise das Generieren von Überwachungsergebnissen. Hierunter können zum einen ein Zuordnen von Werten zu erfassten Sensorsignalen und zum anderen ein Vergleich von erfassten oder ermittelten Werten oder Sensordaten mit vorgegebenen Werten fallen. Der Vergleich mit vorgegebenen Werten kann der Vergleich mit einem Schwellwert, der auch als Grenzwert bezeichnet werden kann, sein, aus dem dann als Überwachungsergebnis das Erreichen oder Überschreiten des Schwellwertes erhalten wird. Zusätzlich oder alternativ kann der Vergleich mit vorgegebenen Werten auch zum Auslesen von Daten aus einer Datenbank führen. Beispielsweise kann beim Erkennen einer bestimmten Partikelgröße in der Luft, anhand einer Datenbank erkannt werden, um welche Arten von Pollen es sich bei der gegebenen Jahreszeit handeln wird.

Des Weiteren umfasst die Überwachungseinheit zumindest eine Steuereinheit zum Ansteuern zumindest einer Haustechnikvorrichtung, insbesondere einer Luftbeeinflussungseinheit oder Luftförderungsvorrichtung. Gemäß einer Ausführungsform umfasst die Überwachungseinheit eine Steuereinheit zur Aktivierung von Warnmechanismen und/oder zumindest eine Ausgabeeinheit zur Ausgabe, insbesondere zur Anzeige, von Überwachungsergebnissen.

Die Steuereinheit(en) und die Ausgabeeinheit sind vorzugsweise als Programmteile in der Anwendung realisiert. Die Steuereinheit(en) und die Ausgabeeinheit können in einer gemeinsamen Einheit zusammengefasst sein. Als Steuereinheit wird erfindungsgemäß der Teil der Überwachungseinheit, der auch als Programmteil der Anwendung ausgestaltet sein kann, verstanden, mittels dessen weitere Komponenten der Überwachungseinheit und/oder externe Einheiten oder Vorrichtungen angesteuert und/oder aktiviert werden können. Insbesondere kann die Steuereinheit einen Programmteil der Anwendung ansteuern, mittels dessen Überwachungsergebnisse in ein solches Format gebracht werden, dass diese an einer Ausgabeeinrichtung ausgegeben werden können. So können beispielsweise die aus den erfassten Sensorsignalen ermittelten Werte oder Sensordaten angezeigt oder ein Überschreiten eines Schwellwertes angezeigt werden. Weiterhin kann die Steuereinheit auch eine andere Anwendung auf dem mobilen Endgerät ansteuern oder aktivieren. So kann beispielsweise ein Notruf abgesetzt werden, wenn ein Überschreiten eines Schwellwertes erkannt wird. Zudem ist es auch möglich, dass die Steuereinheit der Überwachungseinheit eine externe Vorrichtung ansteuert. Beispielsweise kann ein automatischer Fensteröffner betätigt werden, wenn der Kohlenmonoxidgehalt der Luft einen gewissen Schwellwert übersteigt. Alternativ oder zusätzlich ist es auch möglich, dass eine Klimaanlage durch die Steuereinheit der Überwachungseinheit angesteuert wird, wenn die Temperatur einen Schwellwert überschreitet.

Erfindungsgemäß ist eine Luftförderungsvorrichtung in Form einer Dunstabzugsvorrichtung vorgesehen, welche den mindestens einen Sensor, der Luftparameter erfasst, umfasst. Als Luftfördervorrichtung wird im Sinne der vorliegenden Erfindung eine Vorrichtung bezeichnet, mittels derer ein Luftstrom in dem Raum erzeugt werden kann und insbesondere Luft zu einem bestimmten Ort angesaugt wird. Erfindungsgemäß stellt die Luftförderungsvorrichtung eine Dunstabzugsvorrichtung dar.

Indem der Sensor an der Luftförderungsvorrichtung vorgesehen ist, können die Luftparameter zuverlässig für die Luft aus dem gesamten Raum bestimmt werden, da die Luft zu der Luftförderungsvorrichtung gesaugt wird. Zudem kann durch die Anordnung des Sensors an der Luftfördervorrichtung das ungewollte Erfassen von Spitzen eines Luftparameters verhindert werden.

Als Dunstabzugsvorrichtung wird im Sinne der Erfindung eine Luftförderungsvorrichtung und insbesondere eine Vorrichtung zum Ansaugen und vorzugsweise zum Reinigen von Luft bezeichnet. Die Dunstabzugsvorrichtung stellt ein Haushaltsgerät zum Betrieb in einer Küche, insbesondere zum Absaugen von Dünsten und Wrasen von einem Kochfeld oder einer Arbeitsplatte dar. Die Dunstabzugsvorrichtung wird daher im Folgenden auch als Dunstabzugshaube bezeichnet. Die Dunstabzugsvorrichtung umfasst erfindungsgemäß zumindest einen Sensor. Der Sensor kann hierbei an oder in der Dunstabzugsvorrichtung vorgesehen sein. Vorzugsweise wird der oder werden die Sensoren in einem Bereich der Dunstabzugsvorrichtung vorgesehen, in dem die durch den Lüfter der Dunstabzugsvorrichtung erzeugte Ansaugströmung auf den Luftstrom in und/oder an der Dunstabzugsvorrichtung wirkt. Insbesondere kann der Sensor daher beispielsweise in einem Bereich der Dunstabzugsvorrichtung angeordnet sein, an dem der Luftstrom, der zu der Ansaugöffnung der Dunstabzugsvorrichtung geleitet wird, strömt oder in dem Bereich, in dem der Luftstrom von der Ansaugöffnung zu dem Lüfter der Dunstabzugsvorrichtung geleitet wird. Vorzugsweise ist der Sensor, sofern an der Dunstabzugsvorrichtung ein Fettfilter vorgesehen ist, dieser in Strömungsrichtung vor dem Fettfilter angeordnet, wenn es sich bei dem Sensor um einen Pollensensor handelt. Bei einem Temperatursensor oder anderen Luftzusammensetzungssensor kann der Sensor in Strömungsrichtung auch hinter dem Fettfilter angeordnet sein.

Weiterhin umfasst die Dunstabzugsvorrichtung erfindungsgemäß zumindest eine Schnittstelle zur Kommunikation mit zumindest einem mobilen Endgerät des Kommunikationsnetzes. Die Schnittstelle wird erfindungsgemäß auch als Kommunikationsschnittstelle bezeichnet. Die Schnittstelle ist insbesondere zur Übermittlung von Signalen und/oder Daten ausgelegt. Die Schnittstelle kann mit einem oder mehreren Sensoren in einer Einheit integriert sein oder mit dem oder den Sensoren verbunden sein. Insbesondere können über die Schnittstelle von dem oder den Sensoren Signale empfangen werden. Die Schnittstelle kann auch zur Verarbeitung der empfangenen Signale dienen. Die Signale können Sensorsignale darstellen, die eine von dem Sensor erfasste Bedingung wiedergeben. Zusätzlich oder alternativ können von dem Sensor auch Sensordaten, wie beispielsweise eine Information bezüglich des Sensors und/oder einen aus Sensorsignalen ermittelten Wert darstellen. In der Schnittstelle werden die Signale zumindest so verarbeitet, dass diese an eine zu der Dunstabzugsvorrichtung externe Komponente des Überwachungssystems übermittelt werden können. Die Schnittstelle weist vorzugsweise zumindest eine Sendeeinheit auf. Die Schnittstelle ist erfindungsgemäß eine drahtlose Schnittstelle. Als drahtlose Schnittstelle wird insbesondere eine Funkschnittstelle bezeichnet, von der Signale über per Funk an eine zu der Dunstabzugshaube separate Komponente des Überwachungssystems übermittelt werden können.

Das Endgerät stellt erfindungsgemäß ein Endgerät eines Kommunikationsnetzes dar, das weiter oben unter Bezugnahme auf das erfindungsgemäße Überwachungssystem bereits beschrieben wurde. Auch die weiteren Merkmale der bevorzugten Ausführungsform der Dunstabzugsvorrichtung wurden bereits weiter oben unter Bezugnahme auf das Überwachungssystem beschrieben.

Die Verwendung einer Dunstabzugsvorrichtung in dem erfindungsgemäßen Überwachungssystem bringt eine Reihe von Vorteilen mit sich. Insbesondere ist eine Dunstabzugsvorrichtung, insbesondere eine Dunstabzugshaube, in der Regel in einer Küche bereits vorgesehen. Daher können der Sensor und die Kommunikationsschnittstelle an einem bereits vorhandenen Gerät vorgesehen werden. Zudem wird durch eine Dunstabzugsvorrichtung Luft aus dem Raum angesaugt und die in dieser angesaugten Luft erfassten Luftparameter sind daher repräsentativ für den gesamten Raum.

Gemäß einer Ausführungsform ist der mindestens eine Sensor an der Dunstabzugsvorrichtung ein Sensor zum Erfassen von mindestens einem sekundären Luftparameter der Dunstabzugsvorrichtung. Als sekundäre Luftparameter werden solche Luftparameter bezeichnet, die für den Betrieb der Dunstabzugsvorrichtung und insbesondere einer Dunstabzugshaube nicht berücksichtigt werden beziehungsweise nicht notwendig sind. Bei dem Betrieb einer Dunstabzugsvorrichtung, insbesondere einer Dunstabzugshaube ist es beispielsweise bereits bekannt, den Fettgehalt in der angesaugten Luft zu bestimmen und darüber beispielsweise die Lüfterleistung entsprechend einzustellen. Dieser Luftparameter wird erfindungsgemäß als primärer Luftparameter der Dunstabzugsvorrichtung bezeichnet, da dieser zum vorschriftsgemäßen Betrieb oder optimierten Betrieb der Dunstabzugsvorrichtung benötigt wird. Die sekundären Luftparameter, wie beispielsweise der Pollengehalt oder der Gehalt an schädlichen gasförmigen Substanzen, sind für den Betrieb der Dunstabzugsvorrichtung hingegen nicht erforderlich. Indem bei der Dunstabzugsvorrichtung mindestens ein Sensor für sekundäre Luftparameter vorgesehen ist, kann dieser unabhängig von den für den Betrieb der Dunstabzugsvorrichtung erforderlichen primären Luftparametern eingestellt werden. Insbesondere kann beispielsweise die Empfindlichkeit des Sensors so eingestellt werden, dass die Luftparameter für das erfindungsgemäße Überwachen und Einstellen der Luftparameter zuverlässig erfasst werden ohne den Betrieb der Dunstabzugsvorrichtung zu beeinträchtigen.

Gemäß einer Ausführungsform ist die mindestens eine Kommunikationsschnittstelle an der Dunstabzugsvorrichtung mit dem Sensor oder mit mindestens einem der Sensoren verbunden. Diese Ausführungsform ist bei einer Dunstabzugsvorrichtung von besonderem Vorteil, da hierdurch für die Übermittlung von Sensordaten eine Kommunikationsschnittstelle verwendet werden kann, die an der Dunstabzugsvorrichtung bereits für andere Zwecke vorgesehen sein kann. Hierdurch verringert sich die Komplexität der Dunstabzugsvorrichtung gegenüber einer Dunstabzugsvorrichtung an der Sensoren mit eigenen Kommunikationsschnittstellen vorgesehen sind.

Gemäß einer bevorzugten Ausführungsform kann der Sensor an der Dunstabzugsvorrichtung unabhängig von der Dunstabzugsvorrichtung betrieben werden. Dies weist den Vorteil auf, dass auch bei abgeschalteter Dunstabzugsvorrichtung Luftparameter erfasst werden können und so auch in Ruhezeiten der Dunstabzugsvorrichtung dem Benutzer des Überwachungssystems gegebenenfalls Überwachungsergebnisse zur Verfügung gestellt oder geeignete Maßnahmen eingeleitet werden können.

Gemäß einem weiteren Aspekt betrifft die vorliegende Erfindung ein Verfahren zur Überwachung und Einstellen von Luftparametern in einem Raum. Das Verfahren ist dadurch gekennzeichnet, dass das Verfahren mit einem erfindungsgemäßen Überwachungssystem durchgeführt wird.

Vorzugsweise umfasst das Verfahren das Erfassen zumindest eines Luftparameters an einem Sensor, die Übermittlung von Sensordaten an zumindest eine Überwachungseinheit über ein Kommunikationsnetz und Verarbeitung der Sensordaten an der Überwachungseinheit sowie Übertragung der so erhaltenen Überwachungsergebnisse an eine Ausgabeeinheit und/oder an eine Steuereinheit.

Vorteile und Merkmale, die bezüglich des erfindungsgemäßen Überwachungssystems beschrieben werden, gelten - soweit anwendbar - entsprechend für das erfindungsgemäße Verfahren und jeweils umgekehrt.

Die Erfindung wird im Folgenden erneut unter Bezugnahme auf die beiliegenden Figuren genauer beschrieben. Es zeigen:
Figur 1: eine schematische Darstellung einer erfindungsgemäßen Ausführungsform eines Überwachungssystems mit Dunstabzugsvorrichtung;
Figur 2: eine schematische Darstellung eines mobilen Endgerätes einer Ausführungsform des erfindungsgemäßen Überwachungssystems; und
Figur 3: eine schematische Darstellung einer Ausführungsform der Überwachungseinheit.

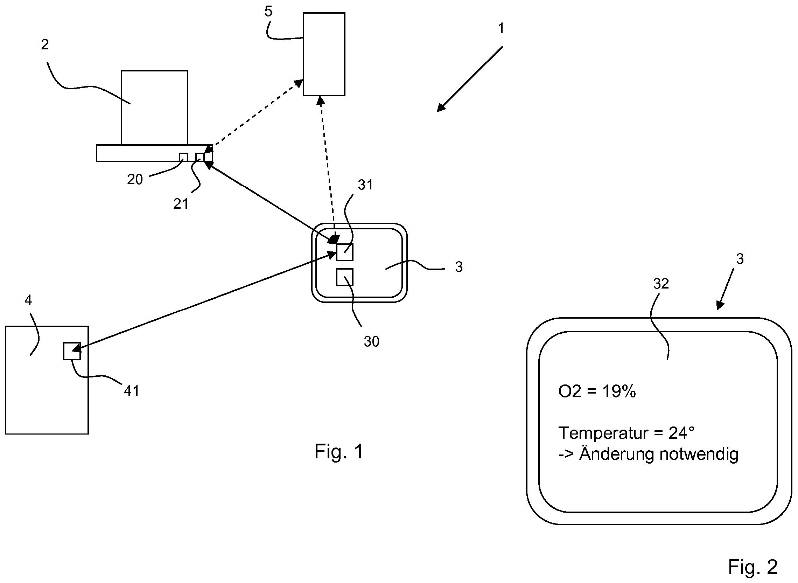

In Figur 1 ist eine schematische Darstellung einer Ausführungsform des erfindungsgemäßen Überwachungssystems 1 gezeigt. Das Überwachungssystem 1 umfasst in der dargestellten Ausführungsform eine Dunstabzugsvorrichtung 2, die im Folgenden auch als Dunstabzugshaube 2 bezeichnet wird, eine Haustechnikvorrichtung 4 sowie ein Endgerät 3. Weiterhin ist ein Server 5 des Kommunikationsnetzes schematisch gezeigt, der beispielsweise einen Netzwerkserver darstellt.

An der Dunstabzugshaube 2 ist in der dargestellten Ausführungsform ein Sensor 20 vorgesehen. An der Dunstabzugshaube 2 können aber auch mehr als ein Sensor 20 vorgesehen sein. Der Sensor 20 kann im Inneren der Dunstabzugshaube 2, insbesondere in der Nähe des Lüfters (nicht gezeigt) der Dunstabzugshaube 2 vorgesehen sein. Alternativ kann der Sensor 20 aber auch am Äußeren der Dunstabzugshaube 2 beispielsweise an dem Wrasenschirm der Dunstabzugshaube 2 vorgesehen sein. Auch bei dieser Anordnung ist der Sensor 20 aber vorzugsweise in der Nähe der Ansaugöffnung der Dunstabzugshaube 2 vorgesehen. Weiterhin umfasst die Dunstabzugshaube 2 eine Schnittstelle 21. Die Schnittstelle 21 stellt eine Kommunikationsschnittstelle und insbesondere eine Funkschnittstelle dar. Die Schnittstelle 21 umfasst vorzugsweise eine Sendeeinheit und gegebenenfalls eine mit der Sendeeinheit verbundene oder in dieser integrierte Empfangseinheit. Die Schnittstelle 21 kann daher eine so genannten Transceiver-Einheit umfassen. Die Schnittstelle 21 ist in der dargestellten Ausführungsform separat zu dem Sensor 20 gezeigt. Es liegt aber auch im Rahmen der Erfindung, dass die Schnittstelle 21 in dem Sensor 20 integriert ist.

Die Haustechnikvorrichtung 4 kann beispielsweise eine Einrichtung zur Steuerung von Fenstern, Türen oder Jalousien, oder eine Sicherheitseinrichtung, wie Einbruchsüberwachungsvorrichtung oder ein Brandmelder, sein. Die Haustechnikvorrichtung 4 weist eine Schnittstelle 41 auf, die eine Kommunikationsschnittstelle, insbesondere eine Funkschnittstelle darstellt und der Schnittstelle 21 der Dunstabzugshaube 2 entsprechen kann.

Das Endgerät 3 kann beispielsweise ein Mobiltelefon, insbesondere ein Smartphone oder ein Tablet PC sein. In dem Endgerät 3 ist zumindest ein Teil einer Überwachungseinheit 30 vorgesehen. Diese Überwachungseinheit 30 stellt vorzugsweise ein Programm dar, das auf dem Endgerät installiert ist und dort ausgeführt werden kann. Die Überwachungseinheit 30 kann somit beispielsweise ein Softwareprogramm, insbesondere eine so genannte App darstellen. Weiterhin umfasst das Endgerät 3 eine Schnittstelle 31, die eine Kommunikationsschnittstelle, insbesondere eine Funkschnittstelle darstellt und der Schnittstelle 21 der Dunstabzugshaube 2 entsprechen kann. Schließlich ist an dem Endgerät 3 eine Ausgabevorrichtung 32 vorgesehen, die in der dargestellten Ausführungsform eine Anzeigeeinheit in Form eines Displays darstellt. Die Schnittstelle 31 ist vorzugsweise mit der Überwachungseinheit 30 zur Übermittlung von Daten verbunden.

Die Funktionsweise der Dunstabzugshaube 2 und des Überwachungssystems 1 soll im Folgenden anhand der Figuren erneut erläutert werden. Der Sensor 20 an der Dunstabzugshaube 2 erfasst Luftparameter, wie beispielsweise die Temperatur, die Luftfeuchtigkeit und/oder Parameter betreffend die Luftzusammensetzung, wie beispielsweise einen Gehalt an festen oder gasförmigen Substanzen. Feste Substanzen können hierbei beispielsweise Pollen oder Staub sein, während gasförmige Substanzen beispielsweise Co, CO2, SO2 oder NOx sein können. Die an dem Sensor 20 erfassten Sensorsignale werden vorzugsweise an dem Sensor 20 selber oder in der Schnittstelle 21 zu Werten, die auch als Sensordaten bezeichnet werden können, verarbeitet. Zusätzlich können mit den aus den Sensorsignalen ermittelten Werten auch andere Sensordaten, wie beispielsweise eine Angabe über die Position des Sensors oder Umgebungsbedingungen des Sensors 20 an die Schnittstelle 21 übertragen werden. Über die Schnittstelle 21 der Dunstabzugshaube 2 können die Sensordaten dann an das Endgerät 3 drahtlos übertragen werden. Die so übermittelten Sensordaten werden an der Schnittstelle 31 des Endgerätes 3 empfangen. Von dort werden die Sensordaten an die Überwachungseinheit 30 übermittelt. In der Überwachungseinheit 30 werden die Sensordaten vorzugsweise verarbeitet. Hierbei kann beispielsweise ein Vergleich empfangener Sensordaten mit vorgegebenen Schwellwerten oder Grenzwerten durchgeführt werden. Alternativ oder zusätzlich können die Sensordaten in ein Format gebracht werden, in dem diese über die Ausgabevorrichtung 32 ausgegeben, im vorliegend gezeigten Fall angezeigt, werden können. Bei der Ausgabe der Sensordaten können zudem Überwachungsergebnisse mit ausgegeben werden. Insbesondere kann, wie in Figur 2 gezeigt, bei Erkennen der Überschreitung eines oder mehrerer Schwellwerte ausgegeben, das heißt angezeigt werden, dass eine Änderung erforderlich ist.

Zusätzlich zu dieser Datenübermittlung von der Dunstabzugshaube 2 an das Endgerät 3, können auch von der Haustechnikvorrichtung 4 über die Schnittstelle 41 Informationen an das Endgerät 3 übermittelt werden. Diese Informationen können beispielsweise den Öffnungsgrad eines Fensters, die Einstellung einer Klimaanlage und dergleichen sein.

Die so an der Schnittstelle 31 des Endgerätes 3 empfangenen Informationen können bei der Verarbeitung der Sensordaten des Sensors 20 berücksichtigt werden.

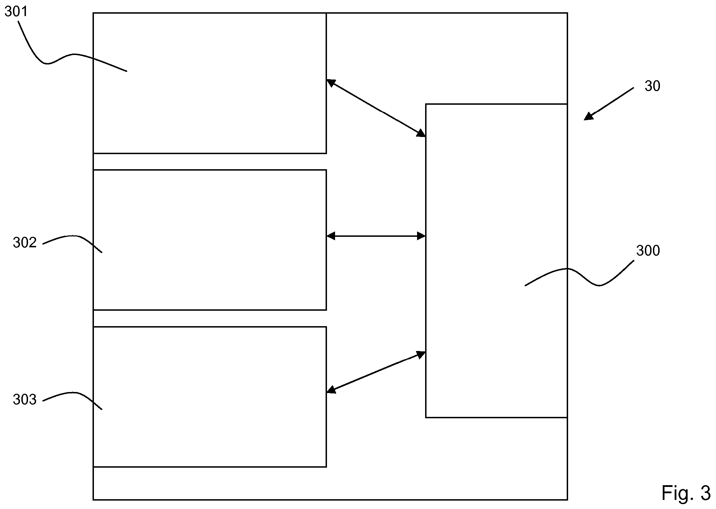

Wie sich aus Figur 3 entnehmen lässt, kann die Überwachungseinheit 30 mehrere Teile aufweisen, die allerdings auch zumindest teilweise zusammengefasst sein können. In der dargestellten Ausführungsform weist die Überwachungseinheit 30 eine Verarbeitungseinheit 300, eine Steuereinheit 301 zum Ansteuern zumindest eine Luftbeeinflussungseinheit, eine Steuereinheit 302 zur Aktivierung von Warnmechanismen und eine Ausgabeeinheit 303 zur Ausgabe von Überwachungsergebnissen umfasst.

Die Verarbeitungseinheit 300 ist vorzugsweise mit der Schnittstelle 31 des mobilen Endgerätes 3 verbunden. In der dargestellten Ausführungsform ist die Verarbeitungseinheit 300 auf dem Endgerät 3 vorgesehen. Es ist allerdings auch möglich, dass die Verarbeitungseinheit 300 beispielsweise auf dem Server 5 oder einer anderen Komponente des Überwachungssystems 1 vorgesehen ist und lediglich mit den weiteren Teilen der Überwachungseinheit 30 auf dem mobilen Endgerät 3 kommuniziert. In der Verarbeitungseinheit kann beispielsweise ein Vergleich von empfangenen Sensordaten, insbesondere von Werten, die aus Sensorsignalen ermittelt wurden, mit einem oder mehreren Schwell- oder Grenzwerten erfolgen. Je nach dem Vergleichsergebnis, das als Überwachungsergebnis bezeichnet werden kann, kann eine der weiteren Einheiten der Überwachungseinheit 30 angesteuert werden. Beispielsweise kann bei dem Überschreiten eines vorgegebenen Temperaturwertes die Steuereinheit 301 zum Ansteuern zumindest einer Luftbeeinflussungseinheit oder einer Luftförderungsvorrichtung angesteuert werden. Hierdurch kann von der Überwachungseinheit 30 ein entsprechendes Signal, insbesondere über die Schnittstelle 31 an die entsprechende Haustechnikvorrichtung 4 übermittelt werden und beispielsweise die Heizung für den Raum, in dem die Luftparameter erfasst wurden, heruntergeregelt werden. Zusätzlich oder alternativ kann die Ausgabeeinheit 303 zur Ausgabe von Überwachungsergebnissen angesteuert werden. Hierdurch kann eine Ausgabe, beispielsweise eine Anzeige auf der Ausgabevorrichtung 32 erzeugt werden, aus der sich für den Benutzer des Überwachungssystems 1 ergibt, dass die Heizung heruntergedreht werden muss oder derzeit heruntergeregelt wird. Weiterhin kann von der Verarbeitungseinheit 300 beispielsweise die Steuereinheit 302 angesteuert werden, die zum zur Aktivierung von Warnmechanismen dient. Dies kann beispielsweise bei Erkennen des Überschreitens einer Pollenbelastung in der Luft erfolgen. In diesem Fall kann über die Steuereinheit 302 beispielsweise die Kommunikationseinheit (nicht gezeigt) des mobilen Endgerätes 3 aktiviert werden und ein Notruf, beispielsweise an den behandelnden Arzt, abgesetzt werden. Weiterhin ist es selbstverständlich auch möglich, dass die Steuereinheiten 301, 302 und die Ausgabeeinheit 303 so miteinander verbunden sind, dass diese einander aktiveren oder ansteuern können.

Wie in der Figur 2 schematisch dargestellt, kann die Übermittlung von Sensordaten von der Schnittstelle 21 der Dunstabzugsvorrichtung 2 auch über den Server 5 an das mobile Endgerät 3 erfolgen. In diesem Fall werden vorzugsweise die Sensordaten an den Server 5 übermittelt, auf dem diese in einer Verarbeitungseinheit 300 der Überwachungseinheit 30 verarbeitet werden. Die so verarbeiteten Sensordaten oder die daraus erhaltenen Überwachungsergebnisse können dann an die entsprechenden Einheiten 301, 302, 303 auf dem mobilen Endgerät 3 übertragen werden. Bei dem Vorsehen der Verarbeitung der Sensordaten auf dem Server 5 können auf einfache Weise auch zusätzliche Informationen, wie beispielsweise Angaben über die Jahreszeit oder die Außentemperatur bei der Verarbeitung und der Auswahl der anzusteuernden Einheit 301, 302, 303 berücksichtigt werden. Auch bei dem Vorsehen der Verarbeitungseinheit 300 auf dem mobilen Endgerät 3 selber können solche oder andere Informationen, wie beispielsweise persönliche Profile des Benutzers des Überwachungssystems 1 berücksichtigt werden.

Die vorliegende Erfindung ist nicht auf die dargestellten Ausführungsformen und Beispiele beschränkt. Bevorzugte Ausführungsformen der Erfindung lassen sich wie folgt zusammenfassen. Gemäß einer Ausführungsform wird mit der vorliegenden Erfindung die Integration von Sensoren in Dunstabzugshauben zur Analyse von Luftparametern wie Temperatur, Luftfeuchtigkeit, Pollen und gasförmiger Substanzen ermöglicht. Die Auswertung der erfassten Parameter erfolgt vorzugsweise mittels einer entsprechenden App beispielsweise auf einem Smartphone oder Tablet PC.

Mit der vorliegenden Erfindung lässt sich eine Reihe von Vorteilen erzielten. Die Luftqualität im Wohnraum wirkt sich maßgeblich auf das Wohlbefinden und die Leistungsfähigkeit von Menschen aus. Ferner gibt eine Analyse der Luftzusammensetzung Rückschluss auf schädliche Gase und Stoffe, die für Allergiker eine Belastung oder Gefahr darstellen. Daneben tragen Raumtemperatur und Luftfeuchtigkeit auch zum Energiebedarf in Privathaushalten bei und sind daher unter dem Aspekt der Energieeffizienz optimiert einzustellen.

Gemäß einer Ausführungsform der Erfindung ist in eine Dunstabzugshaube mindestens ein Sensor zur Erfassung verschiedener Luftparameter wie Temperatur, Luftfeuchtigkeit, Pollen und gasförmigen Substanzen (CO2, CO, SO2, NOx, etc.) integriert. Dabei kann die Dunstabzugshaube samt Sensor den Teil eines größeren Überwachungssystems, das auch als Gesamtsystems bezeichnet werden kann, darstellen. In dem Überwachungssystem können auch Haustechnik (Fenster, Türen, Jalousien) oder Sicherheitseinrichtungen (Alarmmelder für Einbruch, Brand) integriert sein. Der Sensor an der Dunstabzugshaube erfasst die Luftwerte bei und auch ohne Betrieb der Dunstabzugshaube. Im ersten Fall kann auf umfassendere Ergebnisse geschlossen werden, da Luftmassen aus dem gesamten Wohnraum angesaugt werden. Der Sensor verfügt beispielsweise über eine Funkschnittstelle oder ist mit einer solchen verbunden und gibt die erfassten Werte an eine spezielle App/Software auf einem Smartphone weiter. Die App/Software wertet die Daten aus und gibt dem Nutzer Rückmeldung über die Luftzusammensetzung und Hinweise zur möglichen Verbesserung.

Mit der vorliegenden Erfindung lassen sich unter anderem folgende Vorteile erzielen. Insbesondere stellt die vorliegende Erfindung eine platzsparende Lösung dar, da durch die Integration des Sensors in die Dunstabzugsgehäuse kein separater Platz in dem Wohnraum benötigt wird. Die Analyse der durch die Dunstabzugshaube angesaugten Luft liefert qualitativ höherwertige Ergebnisse als die Analyse ruhender Luft. Zudem kann Schimmel vermieden werden, da eine optimale Luftzusammensetzung eingestellt werden kann. Weiterhin wird die Sicherheit im Wohnbereich gesteigert. Im Fall einer Rauch- oder Brandgasermittlung kann über die App automatisch ein Notruf abgesetzt werden. Zudem wird die Lebensqualität durch bessere Luft im Wohnraum gesteigert. Die vorliegende Erfindung kann auch als Hilfestellung für Allergiker, wie Graspollenallergiker, oder Asthmatiker dienen. Durch die optimale Wohnraumtemperatur kann eine Energieersparnis erzielt werden. Zudem lassen sich durch die Integration in weitere Systeme im Haushalt wie Sicherheit (Bewegungsmelder, Feuermelder, etc.) zusätzliche Vorteile ableiten.

### Bezugszeichenliste

- 1: Überwachungssystem
- 2: Dunstabzugsvorrichtung
- 20: Sensor
- 21: Schnittstelle
- 3: mobiles Endgerät
- 30: Überwachungseinheit
- 300: Verarbeitungseinheit
- 301: Steuereinheit
- 302: Steuereinheit
- 303: Ausgabeeinheit
- 31: Schnittstelle
- 32: Ausgabevorrichtung
- 4: Haustechnikvorrichtung
- 41: Schnittstelle
- 5: Server

## Patentansprüche

1. Überwachungssystem zur Überwachung und Einstellung von zumindest einem Luftparameter in einem Raum, das Überwachungssystem umfassend eine Dunstabzugsvorrichtung, einen Sensor (20), mindestens eine Überwachungseinheit (30), die zu dem Sensor (20) separat vorgesehen ist und über eine drahtlose Kommunikationsverbindung eines Kommunikationsnetzes mit dem Sensor (20) verbunden ist und mindestens ein mobiles Endgerät (3) des Kommunikationsnetzes, **dadurch gekennzeichnet, dass** die Dunstabzugsvorrichtung zumindest den einen Sensor (20) zur Erfassung des zumindest einen Luftparameters und zumindest eine drahtlose Kommunikationsschnittstelle (21) zur Kommunikation mit dem mindestens einen mobilen Endgerät (3) des Kommunikationsnetzes umfasst, so dass zumindest Sensordaten des mindestens einen Sensors (20) von der Dunstabzugsvorrichtung (2) an den in dem mobilen Endgerät (3) in Form einer Anwendung vorgesehenen Teil der Überwachungseinheit (30), der zur Ausgabe und Weiterverarbeitung von Überwachungsergebnissen, zur Aktivierung von Warnmechanismen und/oder zur Ansteuerung von Haustechnikvorrichtungen dient, übertragen werden können.

2. Überwachungssystem nach Anspruch 1, **dadurch gekennzeichnet, dass** der Sensor (20) ein Sensor zum Erfassen von mindestens einem sekundären Luftparameter der Dunstabzugsvorrichtung (2) ist.

3. Überwachungssystem nach einem der Ansprüche 1 oder 2, **dadurch gekennzeichnet, dass** die mindestens eine Kommunikationsschnittstelle (21) an der Dunstabzugsvorrichtung (2) mit dem Sensor (20) verbunden ist.

4. Überwachungssystem nach einem der Ansprüche 1 bis 3, **dadurch gekennzeichnet, dass** der Sensor (20) an der Dunstabzugsvorrichtung (2) unabhängig von der Dunstabzugsvorrichtung (2) betrieben werden kann.

5. Überwachungssystem nach einem der Ansprüche 1 bis 4, **dadurch gekennzeichnet, dass** die Haustechnikvorrichtungen zumindest eine Luftbeeinflussungseinheit umfassen.

6. Überwachungssystem nach einem der Ansprüche 1 bis 5, **dadurch gekennzeichnet, dass** die Überwachungseinheit (30) eine Anwendung darstellt, die auf dem mobilen Endgerät (3) neben anderen Programmen ausgeführt werden kann.

7. Überwachungssystem nach einem der Ansprüche 1 bis 6, **dadurch gekennzeichnet, dass** die Kommunikationsverbindung zwischen dem Sensor (20) und der Überwachungseinheit (30) zumindest eine mit dem Sensor (20) verbundene Kommunikationsschnittstelle (21) umfasst.

8. Überwachungssystem nach einem der Ansprüche 1 bis 7, **dadurch gekennzeichnet, dass** die Überwachungseinheit (30) eine Verarbeitungseinheit (300) zur Verarbeitung von Signaldaten aufweist.

9. Überwachungssystem nach einem der Ansprüche 1 bis 8, **dadurch gekennzeichnet, dass** die Überwachungseinheit (30) zumindest eine Steuereinheit (302) zur Aktivierung von Warnmechanismen und/oder zumindest eine Ausgabeeinheit (303) zur Ausgabe von Überwachungsergebnissen umfasst.

10. Verfahren zur Überwachung und Einstellen von Luftparametern in einem Raum, **dadurch gekennzeichnet, dass** das Verfahren mit einem Überwachungssystem (1) nach mindestens einem der Ansprüche 1 bis 9 durchgeführt wird.

11. Verfahren nach Anspruch 10, **dadurch gekennzeichnet, dass** dieses das Erfassen zumindest eines Luftparameters an einem Sensor (2), die Übermittlung von Sensordaten an zumindest eine Überwachungseinheit (30) über ein Kommunikationsnetz und Verarbeitung der Sensordaten an der Überwachungseinheit (30) sowie Übertragung der so erhaltenen Überwachungsergebnisse an eine Ausgabeeinheit (303) und/oder an eine Steuereinheit (301, 302) umfasst.

## Claims

1. Monitoring system for monitoring and setting at least one air parameter in a room, the monitoring system comprising a fume extraction device (2), a sensor (20), at least one monitoring unit (30), which is provided separately from the sensor (20) and is connected to the sensor (20) via a wireless communications link of a communications network, and at least one mobile terminal device (3) of the communications network, **characterised in that** the fume extraction device (2) comprises at least the one sensor (20) for acquiring the at least one air parameter and at least one wireless communications interface (21) for communication with the at least one mobile terminal device (3) of the communications network so that at least sensor data from the at least one sensor (20) can be transmitted from the fume extraction device (2) to the part of the monitoring unit (30) which is provided in the mobile terminal device (3) in the form of an application, said part serving for outputting and further processing monitoring results, for activating warning mechanisms and/or for actuating home automation devices.

2. Monitoring system according to claim 1, **characterised in that** the sensor (20) is a sensor for acquiring at least one secondary air parameter of the fume extraction device (2).

3. Monitoring system according to one of claims 1 or 2, **characterised in that** the at least one communications interface (21) on the fume extraction device (2) is connected to the sensor (20).

4. Monitoring device according to one of claims 1 to 3, **characterised in that** the sensor (20) on the fume extraction device (2) can be operated independently of the fume extraction device (2).

5. Monitoring system according to one of claims 1 to 4, **characterised in that** the home automation devices comprise at least one air influencing unit.

6. Monitoring system according to one of claims 1 to 5, **characterised in that** the monitoring unit (30) represents an application which can be executed on the mobile terminal device (3) in addition to other programs.

7. Monitoring system according to one of claims 1 to 6, **characterised in that** the communications link between the sensor (20) and the monitoring unit (30) comprises at least one communications interface (21) connected to the sensor (20).

8. Monitoring system according to one of claims 1 to 7, **characterised in that** the monitoring unit (30) has a processing unit (300) for processing signal data.

9. Monitoring system according to one of claims 1 to 8, **characterised in that** the monitoring unit (30) comprises at least one control unit (302) for activating warning mechanisms and/or at least one output unit (303) for outputting monitoring results.

10. Method for monitoring and setting air parameters in a room, **characterised in that** the method is performed by means of a monitoring system (1) according to at least one of claims 1 to 9.

11. Method according to claim 10, **characterised in that** said method comprises the acquisition of at least one air parameter at a sensor (2), the transmission of sensor data to at least one monitoring unit (30) via a communications network, and processing of the sensor data at the monitoring unit (30) as well as transmission of the monitoring results thus obtained to an output unit (303) and/or to a control unit (301, 302).

## Revendications

1. Système de surveillance destiné à surveiller et régler au moins un paramètre relatif à l'air dans une pièce, le système de surveillance comprenant un dispositif d'évacuation de fumée, un capteur (20), au moins une unité de surveillance (30) qui est ménagée séparément du capteur (20) et est reliée au capteur (20) par l'intermédiaire d'une liaison de communication sans fil d'un réseau de communication, et au moins un terminal mobile (3) du réseau de communication,
**caractérisé en ce que** le dispositif d'évacuation de fumée comprend au moins l'un capteur (20) pour la saisie de l'au moins un paramètre de l'air, et au moins une interface de communication (21) sans fil pour la communication avec l'au moins un terminal mobile (3) du réseau de communication, de sorte qu'au moins des données de capteur de l'au moins un capteur (20) peuvent être transmises par le dispositif d'évacuation de fumée (2) à la partie de l'unité de surveillance (30), ménagée sous forme d'une application dans le terminal mobile (3), laquelle sert à la sortie et au traitement de résultats provenant de la surveillance, à l'activation de mécanismes d'avertissement et/ou à la commande de dispositifs domotiques.

2. Système de surveillance selon la revendication 1, **caractérisé en ce que** le capteur (20) est un capteur destiné à saisir au moins un paramètre secondaire de l'air du dispositif d'évacuation de fumée (2).

3. Système de surveillance selon l'une quelconque des revendications 1 ou 2, **caractérisé en ce que** l'au moins une interface de communication (21) est reliée au capteur (20) sur le dispositif d'évacuation de fumée (2).

4. Système de surveillance selon l'une quelconque des revendications 1 à 3, **caractérisé en ce que** le capteur (20) placé sur le dispositif d'évacuation de fumée (2) peut être mis en fonction indépendamment du dispositif d'évacuation de fumée (2).

5. Système de surveillance selon l'une quelconque des revendications 1 à 4, **caractérisé en ce que** les dispositifs domotiques comprennent au moins une unité d'influence de l'air.

6. Système de surveillance selon l'une quelconque des revendications 1 à 5, **caractérisé en ce que** l'unité de surveillance (30) représente une application qui peut être exécutée sur le terminal mobile (3), outre d'autres programmes.

7. Système de surveillance selon l'une quelconque des revendications 1 à 6, **caractérisé en ce que** la liaison de communication entre le capteur (20) et l'unité de surveillance (30) comprend au moins une interface de communication (21) reliée au capteur (20).

8. Système de surveillance selon l'une quelconque des revendications 1 à 7, **caractérisé en ce que** l'unité de surveillance (30) présente une unité de traitement (300) pour le traitement de données de signaux.

9. Système de surveillance selon l'une quelconque des revendications 1 à 8, **caractérisé en ce que** l'unité de surveillance (30) comprend au moins une unité de commande (302) pour l'activation de mécanismes d'avertissement, et/ou au moins une unité de sortie (303) pour la sortie de résultats provenant de la surveillance.

10. Procédé de surveillance et de réglage de paramètres relatifs à l'air dans une pièce, **caractérisé en ce que** le procédé est réalisé à l'aide d'un système de surveillance (1) selon au moins l'une quelconque des revendications 1 à 9.

11. Procédé selon la revendication 10, **caractérisé en ce que** celui-ci comprend la saisie sur un capteur (2) d'au moins un paramètre de l'air, la transmission de données de capteur à au moins une unité de surveillance (30) par l'intermédiaire d'un réseau de communication, et le traitement des données de capteur sur l'unité de surveillance (30), ainsi que la transmission à une unité de sortie (303) et/ou à une unité de commande (301, 302) des résultats de surveillance ainsi obtenus.
